# EUROPEAN PATENT APPLICATION

(11) **EP 1 708 518 A1**
(43) Date of publication of application: **04.10.2006**
(21) Application number: 05252025.1
(22) Date of filing: 31.03.2005
(51) Int. Cl.: H04Q 3/00, H04Q 7/38

(54) **Method and apparatus for locating mobile communication devices**

(71) Applicant: BRITISH TELECOMMUNICATIONS public limited company, London EC1A 7AG (GB)
(72) Inventor: The designation of the inventor has not yet been filed
(74) Representative: Williamson, Simeon Paul

(57) **Abstract**

A device 60 for automatically processing non-network-specific mobile device location request signals. The device comprises a database 64 storing details of telephone numbers detected as having been ported away from their Home Network 20-50. A first receiver receives input request signals requesting the location of a mobile device without specifying a particular network to try. A processor 66 processes the input request signals to obtain the telephone number of the mobile device to be located, queries the database 64 to determine if the telephone number is recorded as having been ported, and if it is determined that it is not recorded as having been ported, it selects the Home Network of the telephone number, but otherwise it selects another network determined by consulting the ported numbers database and possibly also a heurstics table which specifies a preferred ordering of the networks to try, all other things being equal. A first transmitter then generates and transmits a location request signal to the selected network. The resulting reply is forwarded to the originally requesting device (possibly after translating between the terminology used by the selected network and a common terminology used by the device 60). The reply is also used to update the ported numbers database where it provides new information.

## Description

### Field of the Invention

The present invention relates to a method and apparatus for locating mobile communication devices, and in particular to a method of locating mobile telephones and similar devices operating in accordance with the "GSM" (Global System for Mobile [communications]) standard protocol.

### Background to the Invention

Most GSM networks have recently started offering (or are shortly expected to start offering) a service whereby trusted third parties can request the current position of a specified device, identified by its telephone number, provided it is "connected" to that network (the term "connected" here is used to indicate that the mobile device is switched on and registered to the network, either in standby mode or with a call in progress).

In order to obtain this information, however, you need to know to which network the device is connected. Although different ranges of telephone numbers are assigned to different network operators in the first instance, it has more recently been possible to "port" a telephone number; this involves subscribing to a new network operator for service provision, but keeping the number which was originally assigned to the user from a different network operator.

At present, when wishing to locate a mobile device, the operator who would have originally assigned the number (or the legal successor thereof if appropriate - e.g. because the original operator has been acquired by another operator, etc. - throughout this specification, the term "Home Network" or "Home Net" will be used to indicate this party) is firstly contacted. If, however, a number has been ported away from the Home Network, then the Home Network indicates that the number has been ported to another network, but no information is given as to the current operator, and thus the other networks must be "hunted" through, looking for the ported number. This can take an undesirably lengthy time and can also cost money as each operator may make a charge for checking whether it has a particular mobile device connected to it, even if the answer is negative.

The number of ported numbers is increasing and is already significant.

### Summary of the Invention

According to a first aspect of the present invention, there is provided a method of locating a mobile device comprising: maintaining a database of ported telephone numbers; upon receipt of an input request signal from a digital processor controlled device requesting the location of a mobile device, processing the input request signal to obtain the telephone number of the mobile device and querying the ported telephone number database to determine if the telephone number is recorded as having been ported, and if it is determined that it is not recorded as having been ported, selecting the Home Network of the telephone number, but otherwise selecting another network; generating and transmitting an output request signal to the selected network to provide the location of the device having the specified telephone number; receiving and processing a reply signal from the selected network; and generating and transmitting an output response signal to the originally requesting device informing it of the selected network's reply; wherein, in the event that the reply signal indicates that the requested telephone number is not registered with the selected network, updating the ported telephone number database accordingly.

According to a second aspect of the present invention, there is provided a device for processing non-network-specific mobile device location request signals, the device comprising: a database storing details of telephone numbers detected as having been ported away from their Home Network; a first receiver for receiving input request signals requesting the location of a mobile device; a processor for processing the input request signals to obtain the telephone number of the mobile device, for querying the database to determine if the telephone number is recorded as having been ported, and if it is determined that it is not recorded as having been ported, selecting the Home Network of the telephone number, but otherwise selecting another network; a first transmitter for generating and transmitting a location request signal to the selected network; a second receiver for receiving a reply signal from the selected network; and a second transmitter for generating a transmitting an output response signal to the originally requesting device informing it of the selected network's reply; wherein the processor is further operable to update the database in the event that the reply signal from the selected network indicates that the respective telephone number is not registered with it.

According to the present invention, therefore, an efficient method and apparatus are provided for helping to establish the location of a mobile device, by keeping a record of ported telephone numbers and using this to help select which network to query for the location of a specified mobile device, and then performing the actual query. In this way, the various competing network operators do not need to co-operate with one another (which would probably cause difficulties unless closely regulated). Furthermore, it is possible, and preferable, if the method and/or device is operated by a third party "aggregator" who provides its services to a large number of individual applications such that individual applications wishing to take advantage of location services offered by GSM network operators do not need to "hunt" to anything like the same extent, because the third party aggregator can aggregate the information obtained from carrying out a much larger number of requests than a single application could.

In a preferred embodiment, only a single network will be tried for each input request. If the selected network indicates that the device is not registered with it, a response to indicate that this is the case is given to the requesting application which can then decide if it wishes to re-try (on a different network) or whether its window of opportunity (or usefulness) has expired in which case it can simply take no further action. In an alternative embodiment, an option could be given to allow the requesting application to specify that if the device is not found on the first tried network, then a hunt should be instigated to try and track down the ported number; in such a case, a variable charge may be levied to the application for providing such a service since the length of time and number of networks requiring querying will not be known in advance.

Preferably two lists are kept of detected ported numbers, hereinafter referred to as a white list and a black list; the white list specifies numbers which have been ported and for which the new network is known, whereas the black list stores networks to which a specified ported number is known not to be registered (note under normal operation this will always include the Home Network, since otherwise it will be assumed that the number has simply not been ported from the Home Network); any black list entries for a number are removed as soon as the network to which it is registered is detected such that a number should not ordinarily appear in both the white list and the black list.

Preferably, where some or all of the networks use different terminology for reporting the results of a location query, the method or apparatus includes the step of, or means for, converting at least one of the sets of terminology into a common terminology which is then used for reporting the result to the originally requesting device.

### Brief Description of the Figures

In order that the present invention may be better understood, embodiments thereof will now be described, by way of example only, with reference to the accompanying figures in which:
Figure 1 is a block diagram of a mobile device location system;
Figure 2 is a flowchart illustrating the steps performed to attempt to locate a mobile device in the case that a network to try is specified in the request;
Figure 3 is a flowchart illustrating the steps performed to attempt to locate a mobile device in the case that no network to try is specified;
Figure 4 is a flowchart illustrating the sub-steps of the SELECT NETWORK TO TRY sub-routine of the flow chart of Figure 3; and
Figure 5 is a flowchart illustrating the sub-steps of the UPDATE EXCEPTION LISTS AS APPROPRIATE subroutine of Figure 3.

### First Embodiment

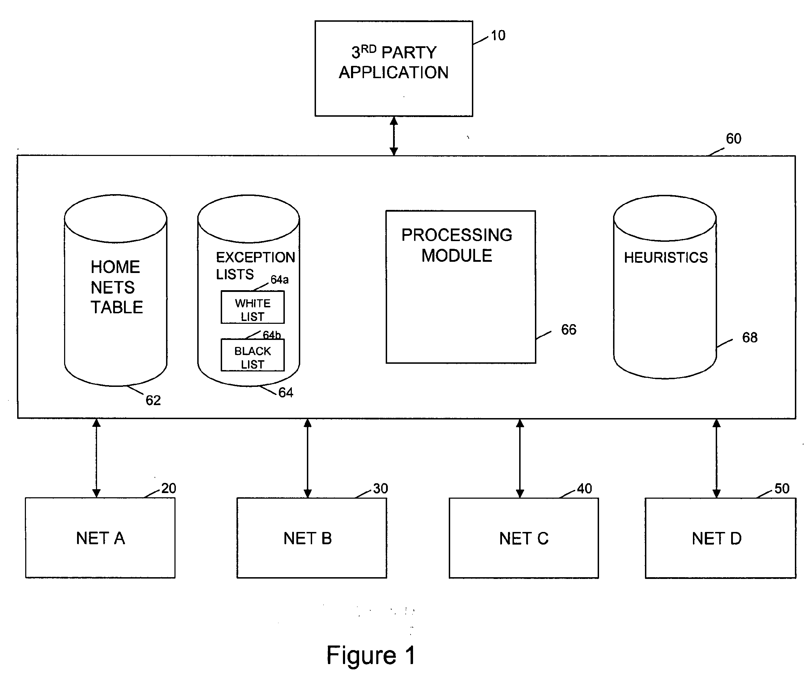

Figure 1 provides a system overview of the first embodiment. The Request Aggregator and Processor (RAP) 60 of the first embodiment receives requests from 3^{rd} party applications (note only one such application 10 is illustrated in Figure 1 for clarity, but in practice there may be an arbitrarily large number of these) and generates requests which it sends on to any of the mobile networks with which it is configured to communicate (i.e. "NET A" 20, "NET B" 30, "NET C" 40 and "NET D" 50).

RAP 60 includes a processing module which is configured to carry out an algorithm (hereinafter referred to as "the RAP Algorithm") which is described in greater detail below. The algorithm makes use of data stored in various different tables including a Home Nets Table which specifies the Home Nets for various ranges of telephone numbers (as mentioned above, a Home Net is the network whose operator would have originally assigned the number, or the legal successor thereof if appropriate); for example, in the UK, Vodafone is the Home Net for telephone numbers commencing 447771... whilst 02 is the Home net for numbers commencing 447714..., being the legal successor of BTCellnet which originally had that range of numbers assigned to it. Another table used by the RAP Algorithm is the Exceptions list table 64 which includes two lists, a white list 64a and a black list 64b; the functions of these lists will be described in greater detail below. Another table used by the RAP Algorithm is a heuristics table 68 which is used to help the algorithm to decide which non-Home net to try when a consultation of the exceptions table does not identify a single preferred network to try. In the present embodiment, the heuristics table provides a preferred ordering of the networks based on the number of subscribers belonging to each network (although clearly more complex heuristics could be used in alternative embodiments, to take into account for example the popularity of different networks with different types of users, including those registered to take up location based services, etc.).

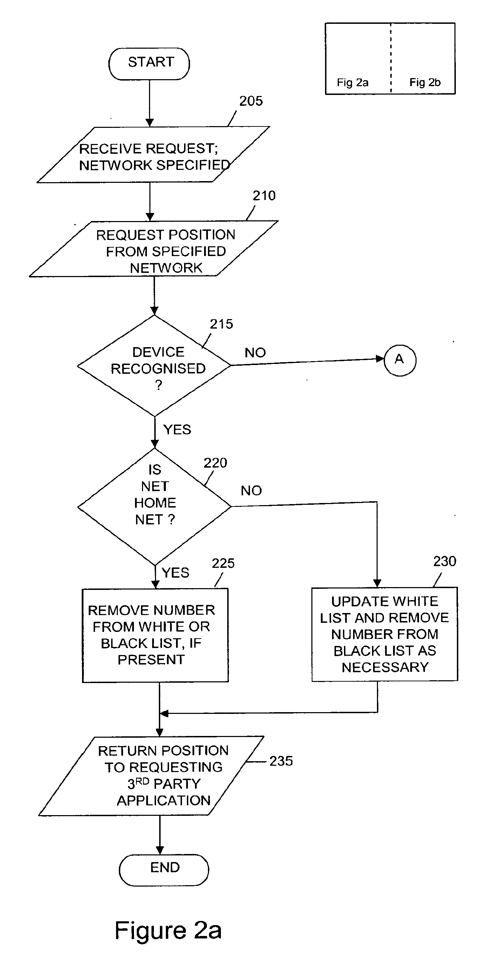

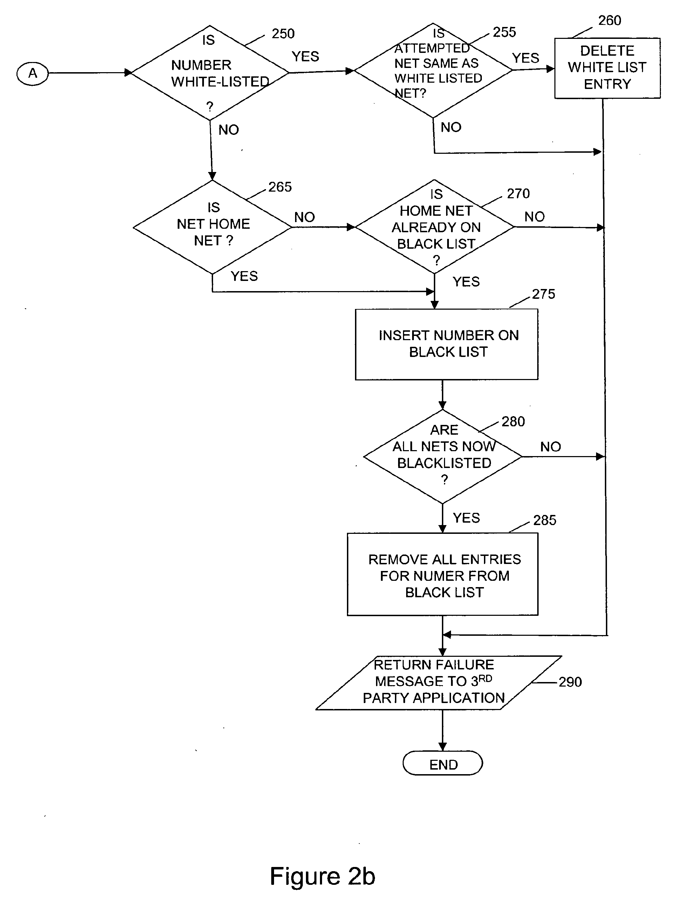

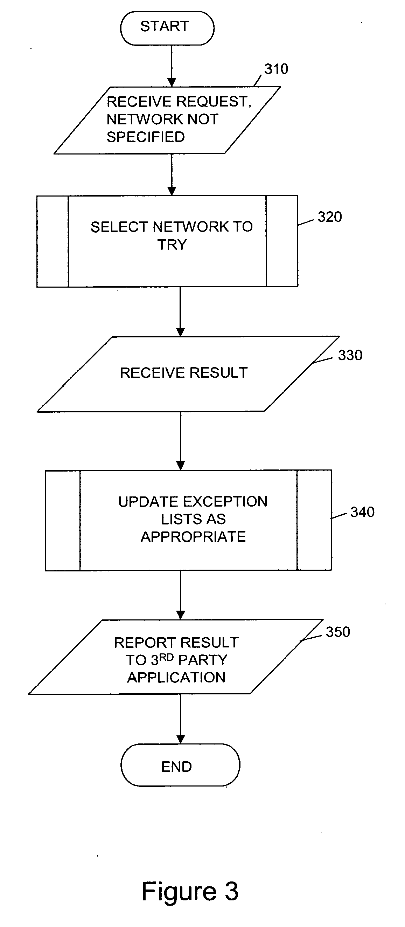

RAP 60 of the present embodiment is operable to receive two different types of location request: one type in which the 3^{rd} party application 10 specifies a particular one of the mobile networks 20-50 to try, and one in which no network is specified. With the first type of request, in which a network to try is specified, RAP 60 simply forwards on the request to the specified network and returns the result to the 3^{rd} party application 10. However, it also notes the response received from the network and updates its white and black lists 64a and 64b as appropriate; the steps taken in responding to this type of request are set out in Figure 2. With the second type of request, in which no network to try is specified, RAP 60 firstly selects a network to try and then updates its lists to account for the response as well as informing the 3^{rd} party application 10 of the response; this is illustrated in Figures 3, 4 and 5 described in greater detail below.

### Network specified

As mentioned above, Figure 2 describes the steps performed by the RAP Algorithm upon receipt of a request from 3^{rd} party application 10 in which the request specifies a particular one of the networks 20-50 to be tried. The initial step 205 is simply the receipt of a request in which a network to try is specified. The algorithm then proceeds immediately to step 210 in which the location of the device with the telephone number specified in the received request is requested from the specified network and a reply is awaited.

In general there are three principal different types of response which may be received from the network in response to such a request: RESULT_INVALID_ADDRESS (this indicates that the device has not been recognised and is not registered with that network); RESULT_LA=X_LO=Y (this indicates that the device is connected and its position is given by the latitude value X and the longitude value Y); and RESULT_MS_SWITCHED_OFF (which indicates that the mobile station is registered to that network but it is currently switched off, a variant to this is a code such as RESULT_SUBSCRIBER_ROAMING which indicates that the subscriber is registered with that network but that the device's location cannot be established because it is roaming on a remote network).

In step 215 it is determined whether or not the device has been recognised (i.e. whether the response is anything but a RESULT_INVALID_ADDRESS type response). If the device has not been recognised then we have tried the wrong network (or that number is currently unassigned by any network) and the method proceeds to step 250. If the device has been recognised then we have the right network and the method proceeds to step 220. At step 220 it is determined whether the successfully tried net is the Home Net. If it is, then the number has not (or more precisely is not at present) ported away from the Home Net and so any entries for the number in either of the exceptions list are superfluous and they are therefore deleted at step 225 before proceeding to step 235. If at step 220 it is determined that the successfully tried net is not the Home Net, then the method proceeds to step 230 in which the exceptions lists are updated, in particular by deleting any entries on the black list and adding (unless it is already present) an entry for that number and the successfully tried net is added to the white list (naturally any extant entry on the white list for that number but with another network is also deleted at this stage).

Upon completion of either step 225 or 230 the method proceeds to step 235 in which the result from the network is reported back to the 3^{rd} party application 10 and then the method ends and awaits receipt of a new request. Note that the response might be the position of the device if the device is switched on and not roaming. But if the device is switched off or is roaming abroad, etc. the response will indicate this to the 3^{rd} party application instead.

If at step 215 it was determined that the device was not recognised the method proceeds to step 250 in which it is determined if the specified number already appears on the white list 64a. If there is no entry for that number in the white list, the method jumps to step 265, otherwise the method proceeds to step 255 where it is determined if the net referred to in the extant entry is the same as that which has just failed to recognise the device, if it is the same, then the entry in the white list is clearly wrong and the method therefore proceeds to step 260 in which the incorrect white list entry is deleted, before proceeding to step 290 described below. On the other hand, if the extant entry in the white list is for a different network to the one which has just failed to recognise the specified device, it is likely that the extant entry in the white list is correct, and the method therefore proceeds directly to step 290.

If at step 250 it is determined that the number does not already appear on the white list, the method proceeds to step 265 in which it is determined if the unsuccessfully tried network is the Home Network for the specified number (by reference to the Home Nets Table 62). If it is not the Home Network for that number, then at step 270 the black list 64b is checked to see if the Home Network already appears on the black list for that number. If it does not, it suggests that the best network to try would be the Home Net and no further updating of the exception lists is required so the method proceeds directly to step 290. If, however, the Home Net is already on the black list for that number, then the method proceeds to step 275.

At step 275 the specified number and the unsuccessfully tried network are added to the black list (unless of course the black list already has an entry for that number and that network). Note that if the method has arrived at step 275 directly from step 265, the network added to the black list will be the Home Net, otherwise, if its come from step 270 the network will be a non-home network. In either case, its possible that the network will already appear on the black list in respect of the specified number, in which case no further action needs to be taken at step 275.

Upon completion of step 275 the method proceeds to step 280 in which it is determined if all of the networks 20-50 have now been entered onto the blacklist for 64a for the specified number. This would indicate that all of the networks have denied knowledge of the specified telephone number. This could happen because the number has ported from one network to another before trying the one network but after trying the other. Alternatively it could be because the number is simply not registered to any of the networks. In any event, in the present embodiment if not all of the networks have been blacklisted for that number, then the method proceeds directly from step 280 to step 290, but otherwise the method proceeds to step 285 in which all of the entries for that number are deleted from the blacklist. This would cause a subsequent request for that number to try the Home Net for that number (which is reasonable and should eventually end up with the requested number being tracked down if it has simply ported from one network to another at a bad time - if the number is unassigned it is still reasonable behaviour as all of the networks will be searched through continuously until the number is assigned; this should happen only rarely as it is unlikely that many requests will be generated for an unassigned number).

At step 290 a failure message is returned to the requesting 3^{rd} party application10. In the present embodiment, the message simply indicates that the specified network (as specified by the requesting 3^{rd} party application 10) has not recognised the device and the 3^{rd} party application 10 is left to decide how it wants to react to that info. In an alternative embodiment the message could provide some further info, for example informing the third party if the number already appears on say the white list, and if so in respect of which network, etc.

Note that both steps 235 and 290, in which a response is sent back to the requesting 3^{rd} party application 10, are described as happening after any updating of the exception lists has occurred. This is done for the sake of clarity in explaining the operation of the RAP Algorithm. In practice a multi-threaded computer system would probably be used to implement the RAP 60 in which case separate threads could be used for sending the obtained response from a network back to the 3^{rd} party application and for updating the exception lists. In this way there would be a minimum possible amount of delay between receiving a response from a network and forwarding it on to the 3^{rd} party application. Of course some care is always required when implementing a multithreaded procedure to avoid different threads interfering with one another but this is a well understood art and details will not therefore be given here.

### Network Not Specified

Figure 3 illustrates in overview the steps taken to process a received request in which no network to try is specified. In brief the first step is to receive the request (310); the process then proceeds to sub-routine 320 in which the RAP 60 consults its various tables to select an appropriate network to try and duly sends it a location request; in following step 330 a response from the network is received; then in following sub-routine 340 the exception lists 64a and 64b are updated as necessary; finally in step 350 the result from the selected network is sent to the 3^{rd} party application 10. Note that step 350 could be carried out before subroutine 340 or, (and this is more likely in practice) a separate thread could be used to carry out steps 330 and 350 from that used to carry out sub-routine 340. Also note that as mentioned above, the response received could be one of a number of possibilities but will either indicate that the device is not recognised as being registered to that network, or it will recognise the device and give it position where possible or an explanation as to why it cannot find its position (e.g. the device is switched off or out of range, or it is roaming abroad, etc.).

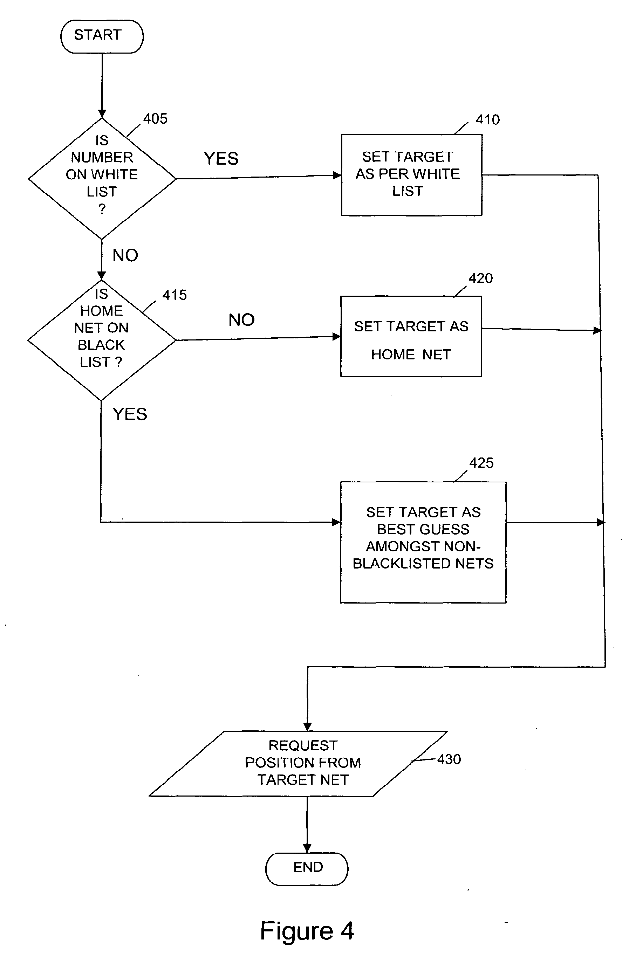

Sub-routine 320 is illustrated in Figure 4. It commences at step 405 by checking to see if the requested number appears on the white list (which would indicate that at the last look-up of this number, it was found on the non-home network specified in the entry on the white list) in which case the method proceeds to step 410 where the network specified for that number on the white list is selected as the target network and then the method jumps to final step 430.

If at step 405 it is determined that the specified number does not appear in the white list, the method proceeds to step 415 in which it is determined whether the home network for the number appears in the black list (note this is equivalent to testing whether the specified number has any entries in the black list as the first such entry should always be a number's home network). If not, it implies that the number does not appear on either of the exceptions lists and therefore the network to try is the number's Home Net, therefore the method proceeds to step 420 in which the specified number's Home Net is set as the target net and then the method proceeds to final step 430.

If at step 415 it is determined that the Home Net for the specified number does appear on the black list, then the method proceeds to step 425 in which the best non-blacklisted network is selected (there should always be at least one non-blacklisted network because if a situation ever arises where all of the networks are blacklisted, all such black list entries are deleted - see steps 280 and 285 and steps 535 and 540). Where there is more than one non-blacklisted network to choose from RAP 60 consults the heuristics table 68 which in this embodiment gives a listing of the preferred order for all of the networks 20-50 and the most preferred non-blacklisted network is selected as the target network. The method then proceeds to step 430.

At step 430 a request is sent to the target network and then the subroutine ends.

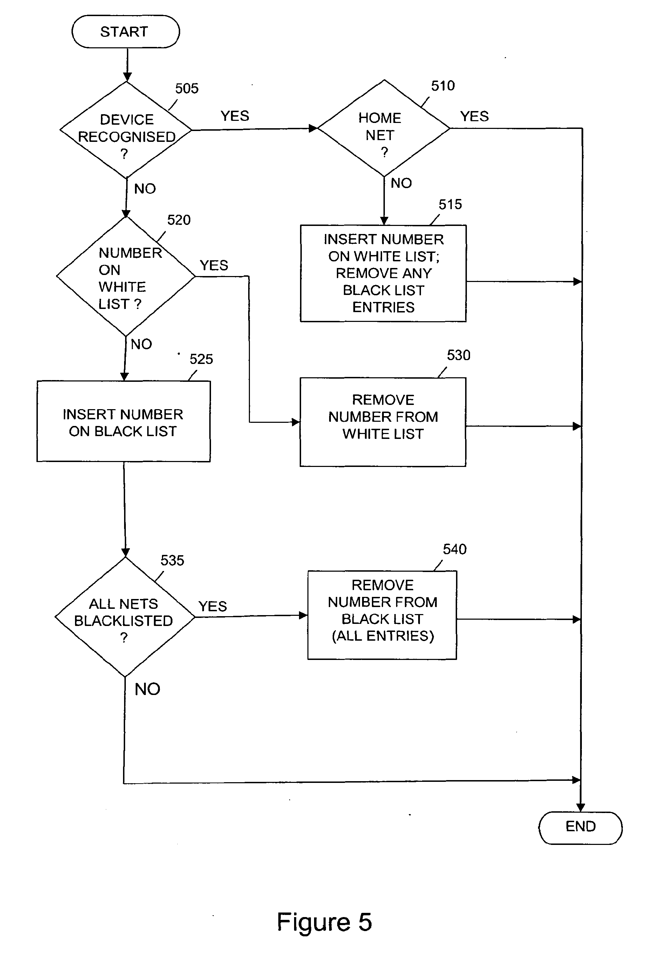

Figure 5 illustrates sub-routine 340. It commences at step 505 in which it is determined if the device has been recognised (i.e. any response other than a device not known or invalid address type response). If the device is recognised the method proceeds to step 510 where it is determined if the successfully tried network is the specified number's Home Net. If so, the subroutine ends (no updating is required as the only way that the algorithm would have tried the Home Net is if the number doesn't appear on any of the exceptions lists, which is correct as the number is clearly non-exceptional). If the network is not the Home network, the method proceeds to step 515 in which the successfully tried non-home network is added to the White list (of course it may already be present on the white list in which case no further updating is required and the subroutine ends). If the number wasn't previously whitelisted, this would indicate that some networks were blacklisted and these black list entries are now removed also in step 515 (there is never any need to have black list entries if the number has a white list entry). Upon completion of step 515 the subroutine ends.

If at step 505 it is determined that the device has not been recognised by the tried network, then the method proceeds to step 520 in which it is determined whether the number is whitelisted (note that if so this will be the just tried and failed network and it will indicate that the number has recently been ported away from this network or unassigned by the network - in either case the white list entry is now incorrect and there is no residual information about where the number is likely to be registered so the algorithm should revert to the default Try-the-Home-Net state). If so, the method proceeds to step 530 in which the entry on the white list is deleted (to leave no entries for the number on either of the exceptions lists) and the subroutine ends.

If at step 520 however it is determined that the number is not on the white list, the method proceeds to step 525 in which the just tried and failed network is added to the black list. This could either be the Home Net for the specified number if there were no extant entries for the specified number when the target network was selected, or, if at least the Home Net did appear in the blacklist, then the best guess non-blacklisted, non-home network selected in step 425. The method then proceeds to step 535 in which it is checked whether the additional entry made in step 525 has caused all of the networks 20 -50 to be blacklisted in which case all of the black list entries for that number are deleted (as in steps 280 and 285). Otherwise if there is still at least one non-blacklisted network the subroutine simply ends directly.

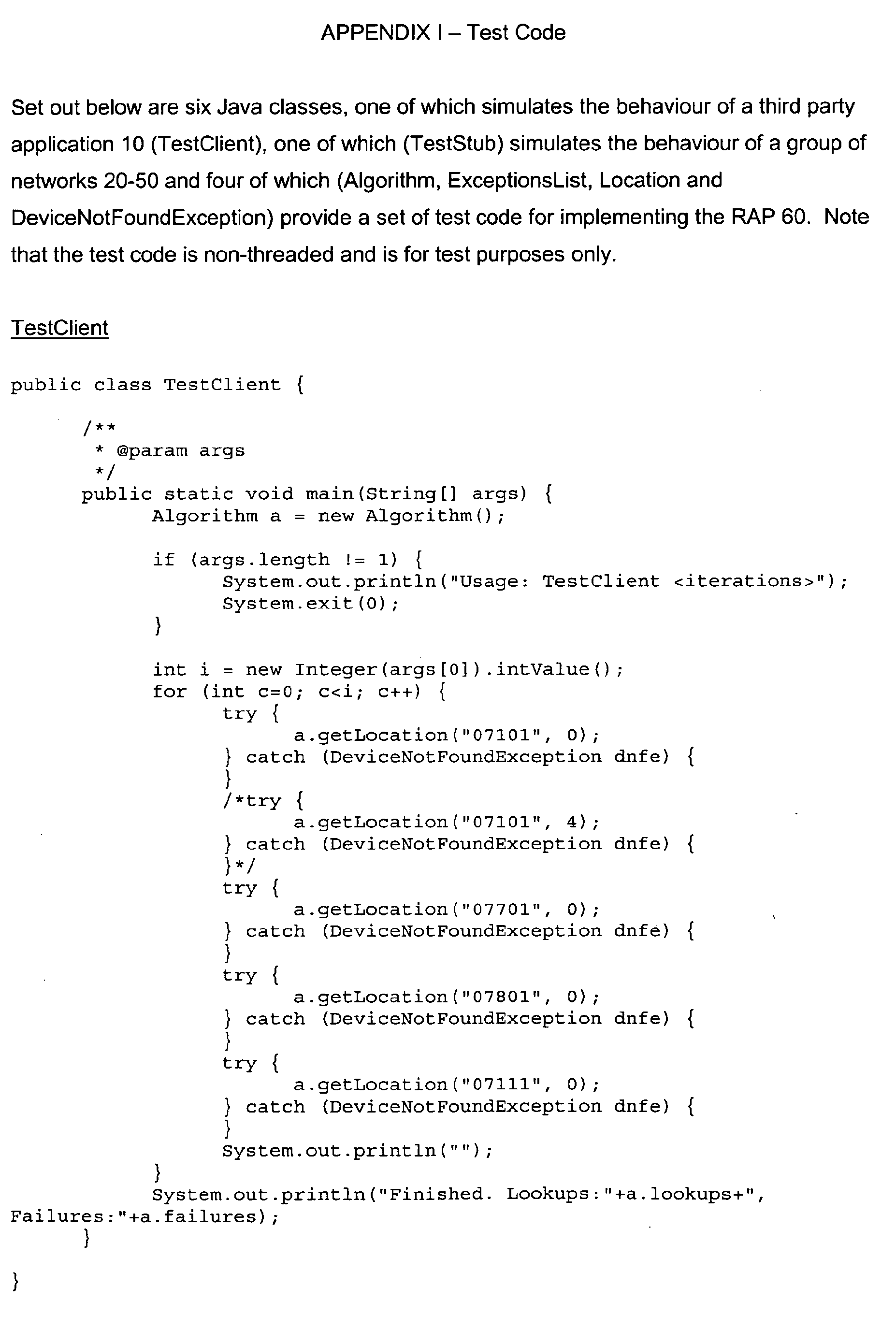

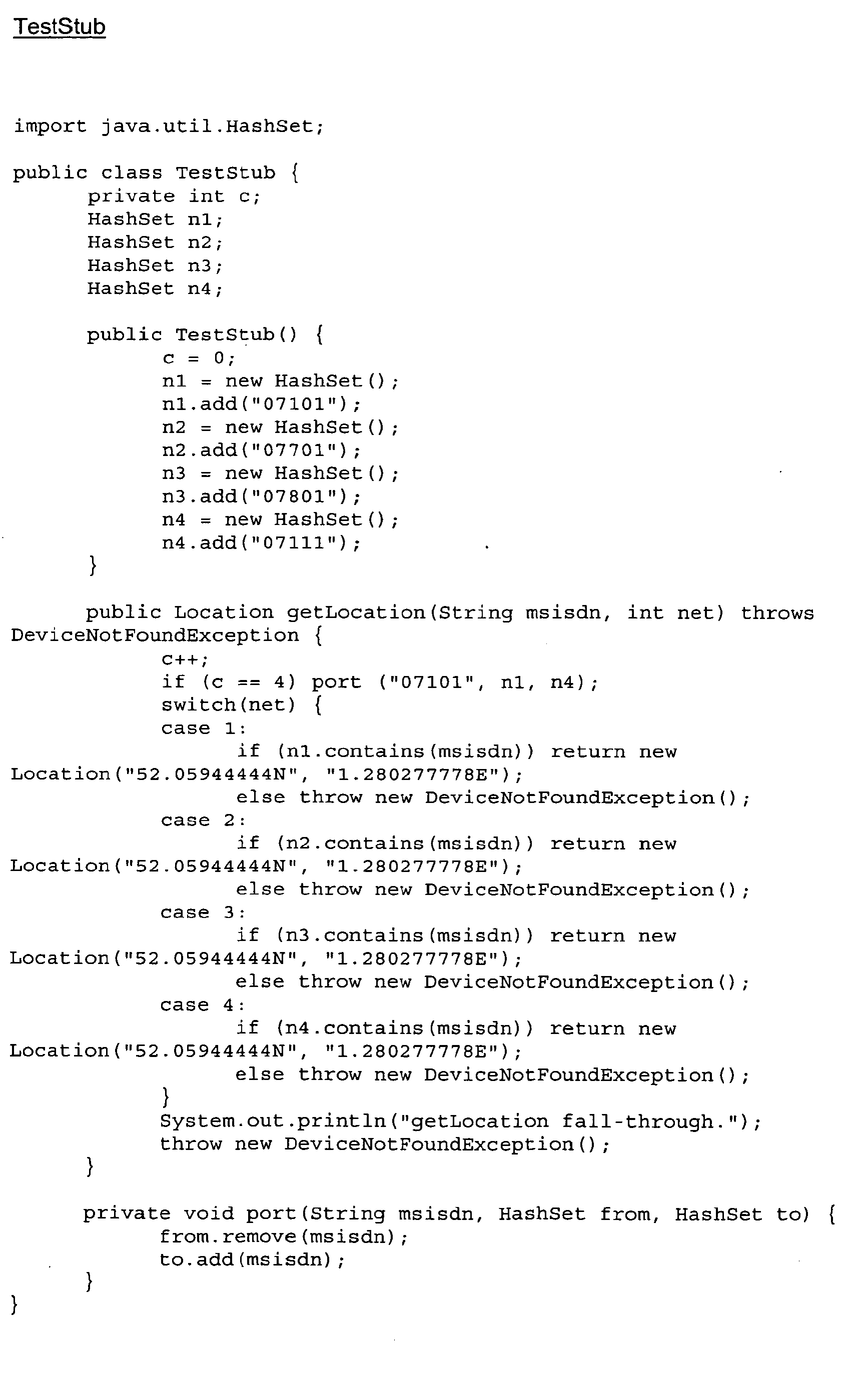

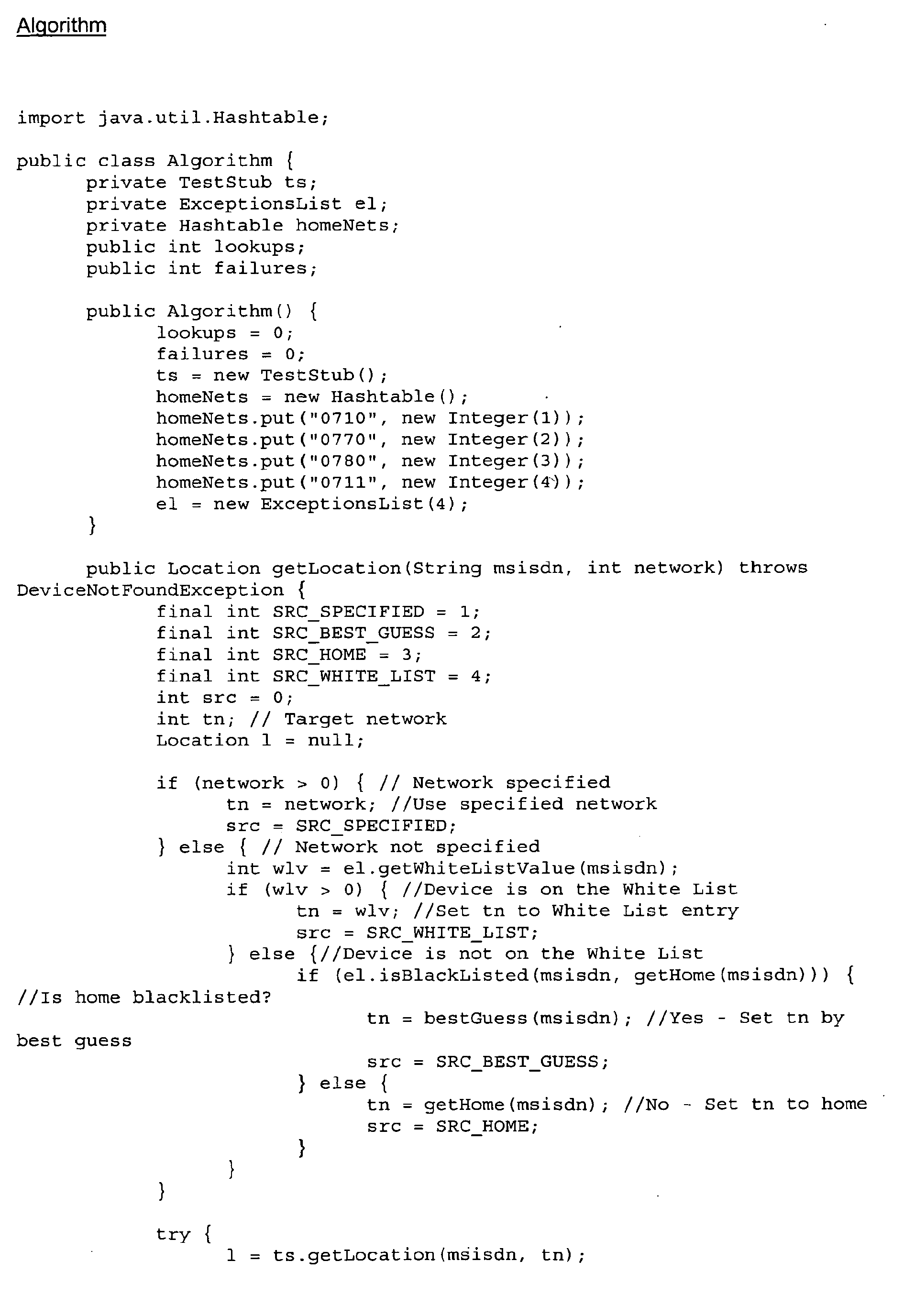

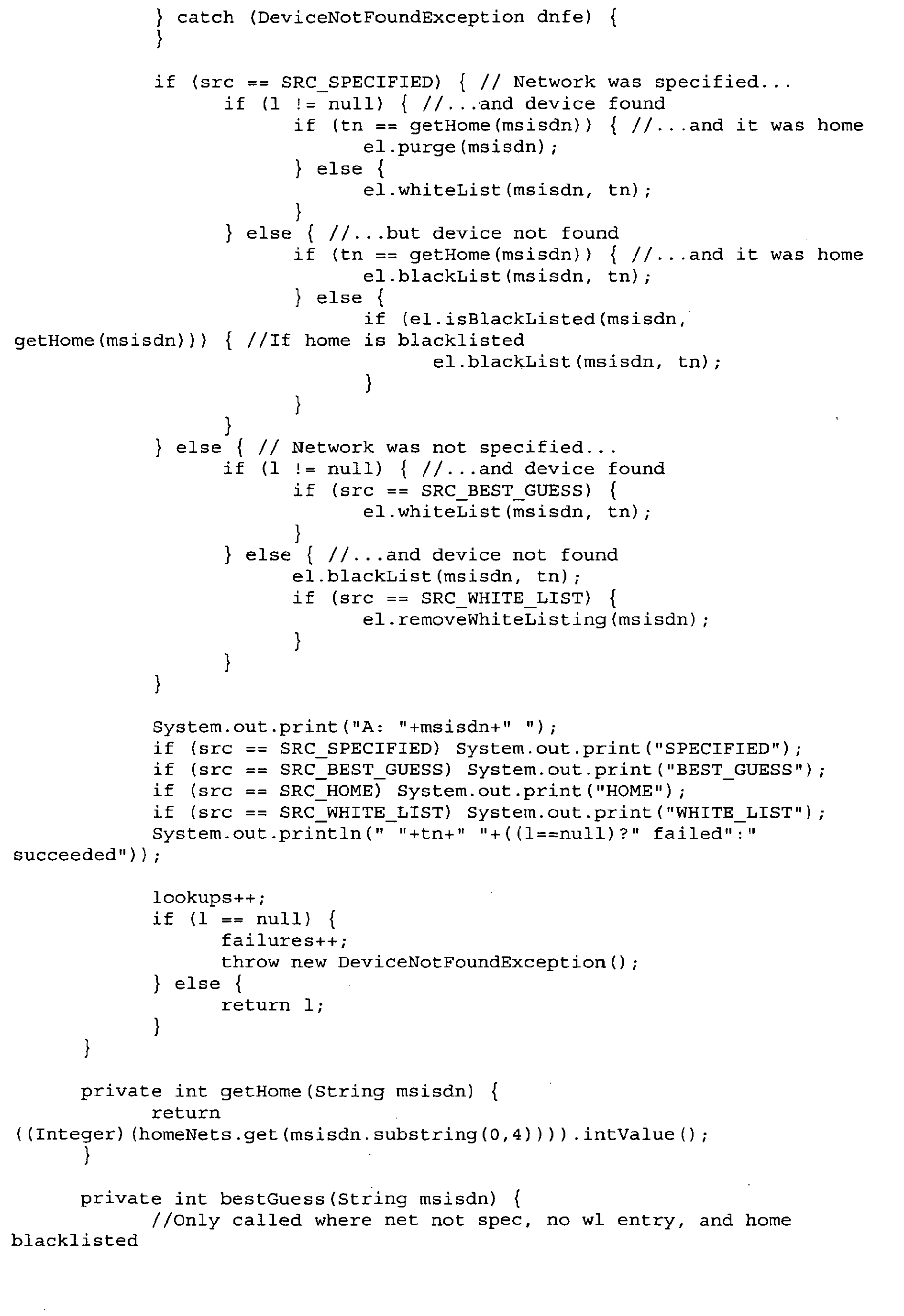

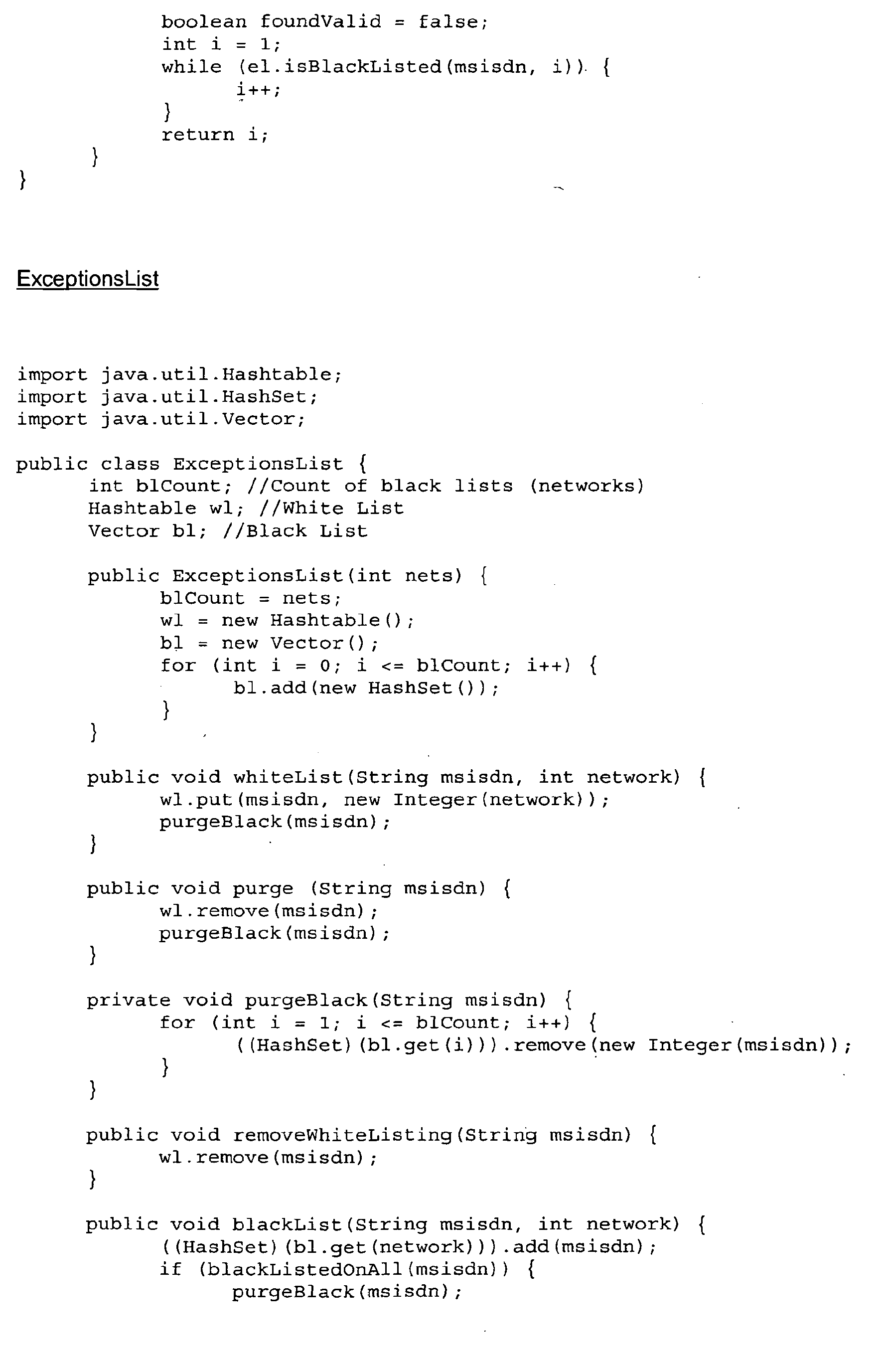

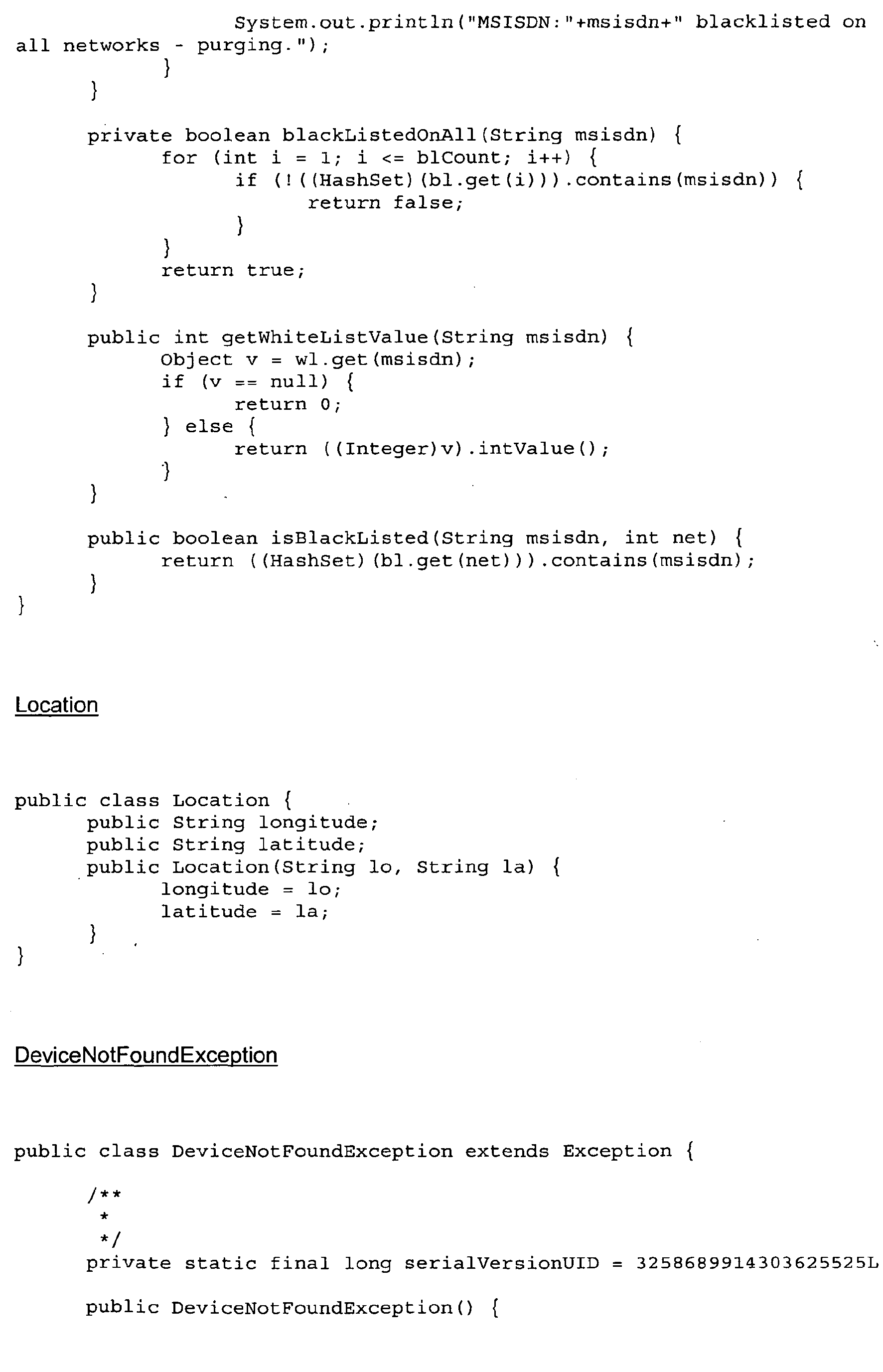

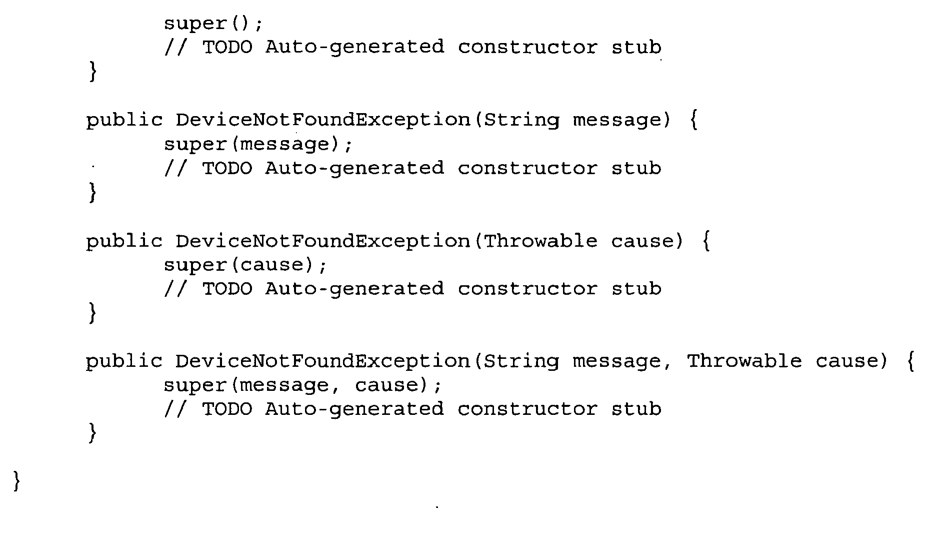

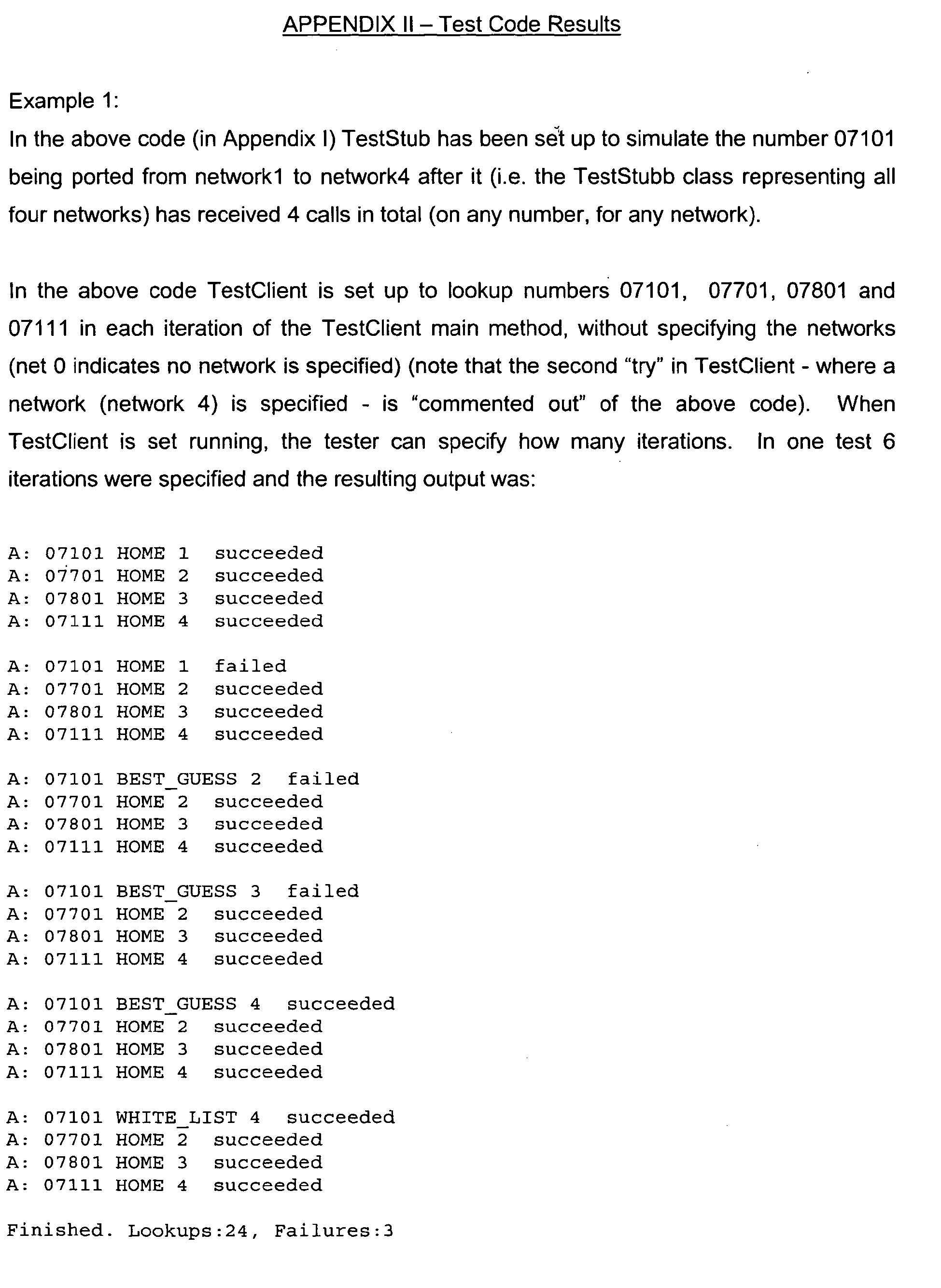

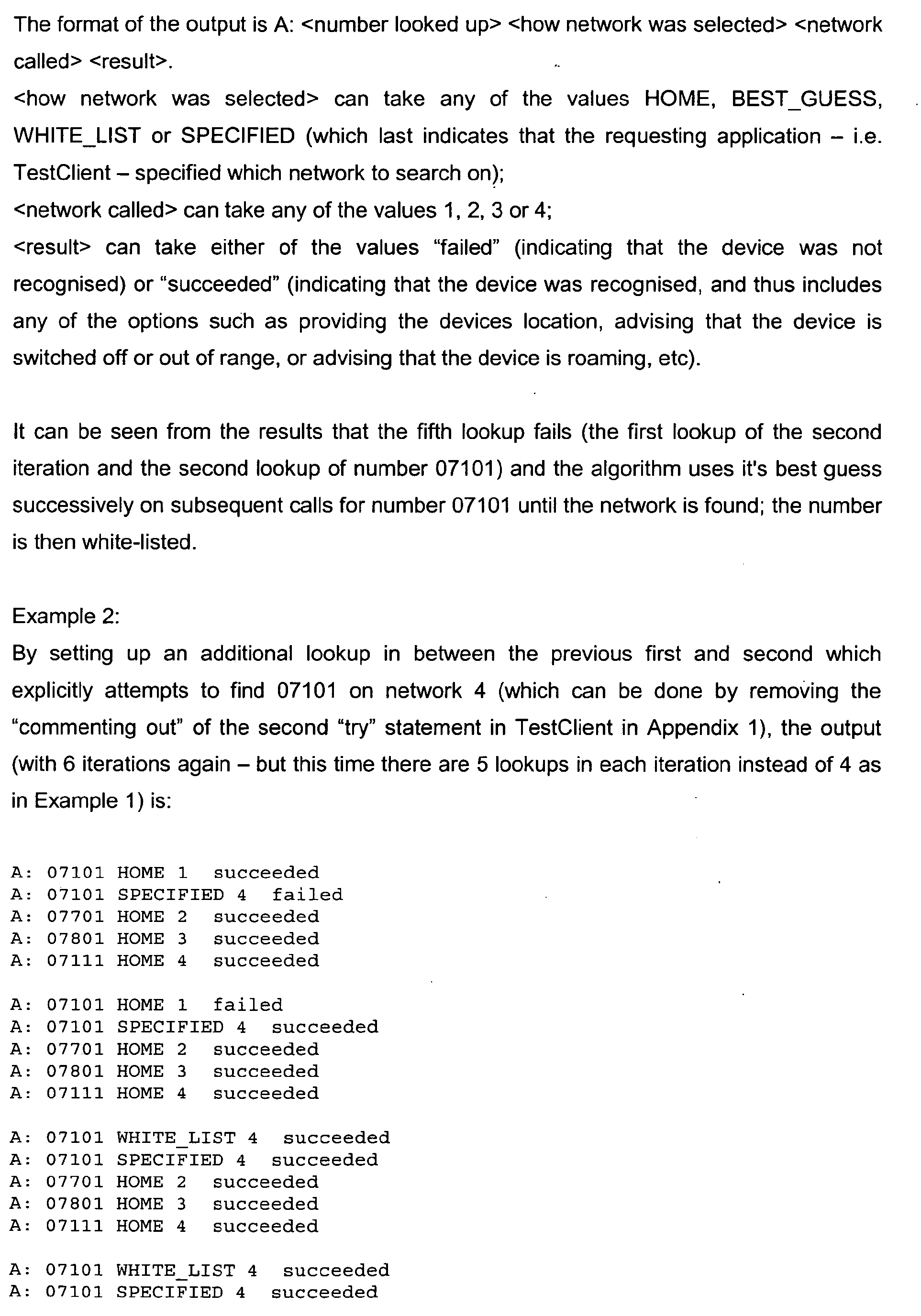

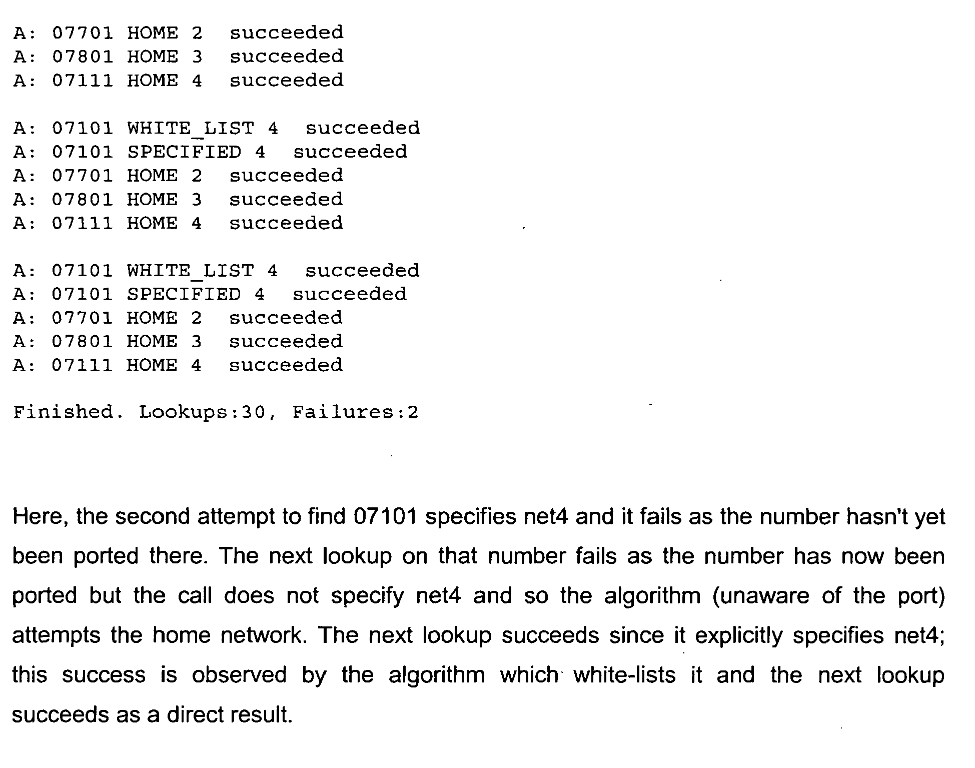

## Claims

1. A method of locating a mobile device comprising:
automatically maintaining a database of ported telephone numbers;
upon receipt of an input request signal from a device requesting the location of a mobile device, automatically processing the input request signal to obtain the telephone number of the mobile device as specified in the request signal and querying the ported telephone number database to determine if the telephone number is recorded as having been ported, and, if it is determined that it is not recorded as having been ported, selecting the Home Network of the telephone number, but otherwise selecting another network;
automatically generating and transmitting an output request signal to the selected network to provide the location of the device having the specified telephone number;
receiving and automatically processing a reply signal from the selected network;
automatically generating and transmitting an output response signal to the originally requesting device informing it of the selected network's reply; and
updating the ported telephone number database in accordance with the selected network's reply.

2. A method according to claim 1 in which the database of ported telephone numbers includes a whitelist table storing ported telephone numbers in association with a network identifier of a network which has previously acknowledged having the respective telephone number registered to it, and in which the database of ported telephone numbers includes a blacklist table storing ported telephone numbers in association with one or more network identifiers of networks which have previously disclaimed the respective telephone number as not being registered with them.

3. A method according to either preceding claim further comprising:
maintaining a heuristics table which specifies a preferred ordering of networks; and
using the heuristics table to select a single network from a plurality of possible networks in the event that the database of ported telephone numbers indicates one or more networks which have previously disclaimed the respective telephone number as not being registered with them in such a way that at least two other networks are not recorded in the database as having previously disclaimed the respective telephone number.

4. A method according to any one of the preceding claims further comprising:
converting between at least one of a plurality of different sets of terminology employed by the networks for processing mobile device location requests and a common terminology which is then used for receiving and reporting the results of requests from the originally requesting device.

5. A device (60) for automatically processing non-network-specific mobile device location request signals, the device comprising:
a database (64) storing details of telephone numbers detected as having been ported away from their Home Network (20-50);
a first receiver for receiving input request signals requesting the location of a mobile device without specifying a particular network to try;
a processor (66) for processing the input request signals to obtain the telephone number of the mobile device, for querying the database (64) to determine if the telephone number is recorded as having been ported, and if it is determined that it is not recorded as having been ported, selecting the Home Network of the telephone number, but otherwise selecting another network;
a first transmitter for generating and transmitting a location request signal to the selected network;
a second receiver for receiving a reply signal from the selected network; and
a second transmitter for generating and transmitting an output response signal to the originally requesting device informing it of the selected network's reply; wherein the processor is further operable to update the ported telephone numbers database in accordance with the selected network's reply.

6. A device according to claim 5 wherein the first receiver is additionally operable to receive input request signals which do specify a particular network to try and wherein the processor is operable to select the specified network regardless of the contents of the ported telephone numbers database where the input request signal specifies a particular network to try.

7. A device according to either claim 5 or 6 wherein the database of ported telephone numbers includes a whitelist table (64a) storing ported telephone numbers in association with a network identifier of a network which has previously acknowledged having the respective telephone number registered to it, and in which the database of ported telephone numbers includes a blacklist table (64b) storing ported telephone numbers in association with one or more network identifiers of networks which have previously disclaimed the respective telephone number as not being registered with them.

8. A device according to any of claims 5, 6 or 7 further comprising:
a database storing a heuristics table (68) which specifies a preferred ordering of networks(20-50); and wherein
the processor (66) is further operable to use the heuristics table (68) to select a single network from a plurality of possible networks where the originally input request signal does not specify a network to try and where the database of ported telephone numbers indicates one or more networks which have previously disclaimed the respective telephone number as not being registered with them in such a way that at least two other networks are not recorded in the database as having previously disclaimed the respective telephone number.

9. A device according to any of claims 5, 6, 7 or 8 wherein the processor is additionally operable to convert between at least one of a plurality of different sets of terminology employed by the networks for processing mobile device location requests and a common terminology which is then used for receiving and reporting the results of requests from the originally requesting device.

10. Carrier means carrying a computer program for causing a general computer to carry out the steps of any one of claims 1 to 4 during execution of the computer program by the general computer.
